# EUROPEAN PATENT SPECIFICATION

(11) **EP 2 724 003 B1**
(45) Date of publication and mention of the grant of the patent: **22.07.2015**
(21) Application number: 12737314.0
(22) Date of filing: 12.06.2012
(51) Int. Cl.: F01P 7/16, G05D 23/13

(54) **ARRANGEMENT FOR AN INTERNAL COMBUSTION PISTON ENGINE AND AN INTERNAL COMBUSTION PISTON ENGINE**
ANORDNUNG FÜR EINEN HUBKOLBENMOTOR UND HUBKOLBENMOTOR
AGENCEMENT POUR UN MOTEUR À COMBUSTION INTERNE À PISTONS ET MOTEUR À COMBUSTION INTERNE À PISTONS

(30) Priority: 23.06.2011 FI 20115653
(43) Date of publication of application: 30.04.2014
(73) Proprietor: Wärtsilä Finland Oy, 65380 Vaasa (FI)
(72) Inventor: NYNÄS, Håkan, FI-65280 Vaasa (FI); LILJENFELDT, Gösta, FI-65450 Solf (FI)
(74) Representative: Genip Oy
(86) International application number: PCT/FI2012/050586
(87) International publication number: WO 2012/175793

(56) References cited:
- EP-A2- 0 893 581
- WO-A2-2007/054330
- DE-A1- 4 033 261
- US-A- 4 032 068

## Description

### Technical field

The present invention relates to an arrangement for an internal combustion piston engine having a cooling system for conveying heat from the internal combustion piston engine and maintaining temperature of the engine and/or its parts at a predetermined range, the cooling system comprising a main cooling fluid channel having a pump system which main cooling fluid channel is arranged to run though at least a part of the engine from which heat is extracted, and a branch channel which branches from the main cooling fluid channel in which branch channel there is a cooler system for cooling the cooling fluid, and into which cooling system a fluid flow control device is arranged at a the location where the branch channel branches from the main cooling fluid channel according to the preamble of claim 1.

Invention relates also to an internal combustion piston engine comprising a cooling system for conveying heat from the internal combustion piston engine and maintaining temperature of the engine and/or its parts at a predetermined range.

### Background art

A combustion engine, particularly an internal combustion piston engine comprises several fluid circuits having control devices for controlling the fluid flows in circuits of the engine. For example a cooling system of an engine is typically controlled in order to maintain the operation temperature within required limits. There are also other fluid flows in connection with which at least some kind of flow rate control is performed, such as fuel injection, charge air / exhaust gas flow, just to mention a few. Typically, controlling such fluid flows is practised by adjusting the flow rate to at least some extent. Basically all fluid flows in an internal combustion piston engine have an impact to its operation, some of the fluid flows requiring very accurate control due to their strong effect on the operation.

The operational requirements of combustion engines are more and more stringent and thus the accuracy and reliability of control systems is ever more important. This relates, in addition to a fuel system the importance of which has been recognized a long ago, to practically all fluid flow systems in an internal combustion piston engine, which have an effect on the overall performance of the engine.

Controlling the temperature in an internal combustion piston engine is typically accomplished by means of circulating water-based solution, which is circulated via the cooling channels provided in the engine removing the generated heat. A whole or a partial flow is divided from the circulation in the engine and directed to a heat exchanger system in which the solution is cooled, after which the cooled solution is returned to the circulation.

The thermostatic valves are sensing the temperature of the surrounding solution and are acting according to changes in the temperature. The thermostatic valves are typically installed to control the temperature of the fluid leaving the engine or they may also be set to control the temperature coming into the engine. Such an arrangement is shown in EP 0 893 581 A2.

In typical engine installations in connection with a power plant or marine engines there can be long distances between the engine and the central coolers. This relates particularly to large internal combustion piston engines being capable of producing power more than 150 kW/cylinder. The flow velocities in the pipes are also limited to avoid erosion, corrosion and high flow losses. As a consequence of the above the response from the control action can be up to minutes late. This has the consequence that the actual engine temperature is fluctuating from too cold to too warm temperature for long periods of time while an average is near to the set value of the thermostatic valve. Transient load changes usually also makes the temperature to fluctuate before settling near to the set values. Mechanical thermostatic valves that are commonly used in engines are able to operate adequately only if the demands on control accuracy are low enough. Thus, there is a need to improve the prior art solution towards more accurate and faster control device for controlling the temperature of an internal combustion piston engine.

An object of the invention is to provide a fluid flow arrangement for and an internal combustion piston engine in which the control performance is considerably improved compared to the prior art solutions.

It is a particular object of an embodiment of the invention to provide a temperature control arrangement for an internal combustion piston engine in which the control performance is considerably improved compared to the prior art solutions.

### Disclosure of the Invention

Objects of the invention are substantially met by an arrangement for an internal combustion piston engine having a cooling system for conveying heat from the internal combustion piston engine and maintaining temperature of the engine and/or its parts at a predetermined range, the cooling system comprising a main cooling fluid channel having a pump system which main cooling fluid channel is arranged to run though at least a part of the engine from which heat is extracted, and a branch channel which branches from the main cooling fluid channel in which branch channel there is a cooler system for cooling the cooling fluid, and into which cooling system a fluid flow control device is arranged at a the location where the branch channel branches from the main cooling fluid channel. It is characteristic to the invention that the fluid flow control device comprises at least two parallel valve units each having two operational positions.

According to another embodiment of the invention the fluid flow control device comprises parallel valve units having different flow characteristics.

According to another embodiment of the invention the arrangement comprises a control system which is arranged to control each of the valve units into one of the two operational positions, between which the valve unit may be switched for selecting a combination of the operational positions of the valve units.

According to still another embodiment of the invention a control system is provided with a probe arranged remotely to the control device.

According to still another embodiment of the invention each valve unit is provided with an actuator connected to the control system.

According to still another embodiment of the invention a control system is provided with at least two probes arranged at different location in the engine.

According to still another embodiment of the invention each valve unit is provided with a removably assembled restriction element (24) effecting on the flow characteristics of the valve unit.

According to still another embodiment of the invention the valve units are identical to each other, with an exception that the restriction elements (24) are different from each other.

According to still another embodiment of the invention the fluid flow control device is arranged to controllably operate with a number of combinations of two operational positions of its valve units.

Objects of the invention are substantially met also by an internal combustion piston engine comprising a cooling system for conveying heat from the internal combustion piston engine and maintaining temperature of the engine and/or its parts at a predetermined range, having cooling sections for charge air, lubrication oil and for cylinders. It is characteristic to the invention that the cooling system comprises a first system and a second system, in which the first system comprises cooling system for cylinder jackets and a high temperature cooling system for charge air and the second system comprises a low temperature cooling system for charge air cooling section and a lubrication oil cooling system and that the first and the second systems are cooling systems according to anyone of the claims 1-10.

### Brief Description of Drawings

In the following, the invention will be described with reference to the accompanying exemplary, schematic drawings, in which
Figure 1 illustrates a fluid flow system in an internal combustion piston engine according to the first embodiment of the invention,
Figure 2 illustrates an advantageous embodiment of a fluid flow control device according to the invention,
Figure 3 illustrates an another embodiment of a valve unit for a fluid flow control device according to the invention,
Figure 4 illustrates an another embodiment of a valve unit for a fluid flow control device according to the invention,
Figure 5 illustrates an advantageous embodiment of a valve unit for a fluid flow control device according to the invention,
Figure 6 illustrates a fluid flow system in an internal combustion piston engine according to another embodiment of the invention, and
Figure 7 illustrates a still another embodiment of a valve unit for a fluid flow control device according to the invention.

### Detailed Description of Drawings

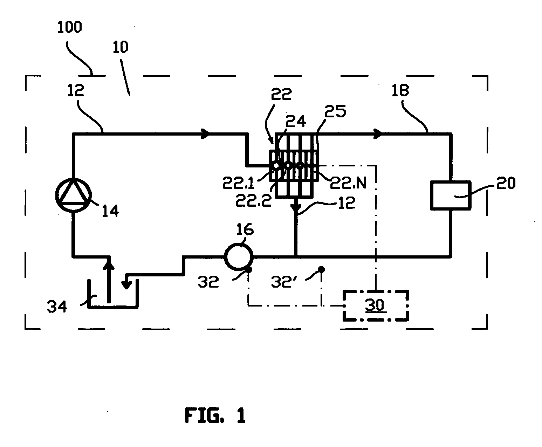

Figure 1 depicts schematically a fluid flow system 10 in an internal combustion piston engine 100. The fluid flow system includes a main fluid channel 12, which may consist of a single flow path or of a plurality of parallel flow paths. The main fluid channel 12 comprises means 14 for increasing the pressure in the main fluid channel 12. In this context the means 14 for increasing the pressure is to be understood broadly even if a symbol of a pump is used the figure 1. In some cases the means 14 for increasing the pressure may, of course, be an actual pump or alike but in some cases even a combustion chamber acts as one in which combustion process may act as the pressurizing means 14. The main fluid channel leads to a utilization unit 16 in which the fluid is utilized in a way depending on the application and process in question. According to an embodiment the utilization unit is a once-through system and in such a case the flow system may not include any or may include only partial recirculation of the fluid. This and other embodiments will become apparent e.g. from the other figures and their description in more detailed manner.

The flow system 10 comprises a branch channel 18 which branches from the main fluid channel 12 forming parallel flow path to the main fluid channel. The purpose of the branch channel is to pass a first portion (0% - 100%) of the fluid through a processing unit 20 in, or in connection with the engine and arrange a second, remaining portion (100% - 0%) of the fluid to bypass the utilization unit 20. In Figure 1 there is also shown a source of fluid 34 which the main fluid channel is connected to. The source of fluid 34 may be for example a fuel tank, oil sump or cooling liquid reservoir of an engine.

The control arrangement comprises further a fluid flow control device 22 at the location where the branch channel branches from the main fluid channel or generally at the location where the branch channel is connected to the main fluid channel. The fluid flow control device 22 comprises several parallel valve units 22.1, 22.2, ... 22.N each of which has two operational positions, between which the valve units may be switched.

According to a preferred embodiment of the invention each of the valve units is provided with a base part 25 and a restriction element 24. Preferably the restriction part 24 is arranged into the valve unit so that it effects on i.e. throttles the fluid flow. The restriction part 24 advantageously is removably assembled to the base part 25. The restriction element is a member effecting on the flow characteristics of the valve unit in throttling manner. More specifically the restriction element 24 effects on the flow resistance of the valve unit, preferably by forming a locally constricted flow area. This is depicted in figure 1 as a circle. Additionally it is advantageous that the base parts 25 of valve units 22.1, 22.2 ... 22.N are substantially identical, and particularly with respect to joining elements by means of which the restriction element 24 joins to the valve unit. The number of valve units may vary but preferably there are at least four units. The restriction part includes means for effecting on the flow characteristics of the valve unit when assembled, which means that the restriction elements are preferably different in different valve units. This way the valve units are modularized allowing their flow characteristics to be changed simply by changing only the only restriction element 24 in the valve unit.

The fluid flow control device is also provided with a control system 30 arranged to control each of the valve units 22.1, 22.2,... 22.N into one of the two operational positions between which the valve unit may be switched. In the embodiment of Figure 1 the operational positions governs the flow of the fluid either to the branch channel 18 or further in the main fluid channel 12. The control system is connected to a probe 32 in connection with the engine 100. The probe may comprise one or several individual probes 32, 32' in the engine.

The control system 30 is arranged to operate so that it reads or receives the measurement value of the probe 32 or the measurement value of the probe 32 is sent to the control system 30. Based on the measurement value or values of the probe the control system determines a need for a change in the control scheme practised. In case a change is needed the control device selects a new combination of operational positions of the valve units. This way a new arrangement of the valve units is set.

The restriction elements 24 are preferably selected so that when the first valve unit has a relative flow area of 1, a second valve unit 1/2, a third valve unit 1/4 etc. i.e. their flow areas are arranged so that the "next" valve unit is doubling the flow area of the previous one. In case the fluid flow control device comprises four on/off valve units the correspondence between the combination of operational positions and flow rate is shown in the following table, which clearly shows the accuracy which can be achieved with 4 valve units.

| Valve unit 1 | Valve unit 2 | Valve unit 3 | Valve unit 4 | Total relative flow rate |
|---|---|---|---|---|
| 0 | 0 | 0 | 0 | 0,000 |
| 0 | 0 | 0 | 1 | 0,125 |
| 0 | 0 | 1 | 0 | 0,250 |
| 0 | 0 | 1 | 1 | 0,375 |
| 0 | 1 | 0 | 0 | 0,500 |
| 0 | 1 | 0 | 1 | 0,625 |
| 0 | 1 | 1 | 0 | 0,750 |
| 0 | 1 | 1 | 1 | 0,875 |
| 1 | 0 | 0 | 0 | 1.000 |
| 1 | 0 | 0 | 1 | 1,125 |
| 1 | 0 | 1 | 0 | 1,250 |
| 1 | 0 | 1 | 1 | 1,375 |
| 1 | 1 | 0 | 0 | 1,500 |
| 1 | 1 | 0 | 1 | 1,625 |
| 1 | 1 | 1 | 0 | 1,750 |
| 1 | 1 | 1 | 1 | 1,875 |

In this embodiment the valve unit 1 provides a relative flow rate 1, valve unit 2 provide a relative flow rate 0,5 an so on. It can be seen that 16 different flow rates can be obtained with four valve units. Correspondingly, 32 and 64 different flow rates may be obtained with 5 and 6 valve units.

As each of the valve units may be independently switched between two operational positions it is possible to set practically any required fluid flow situations that may be needed by arranging and combining of the operational positions of individual valve units suitably. Depending on the type of the valve units the operational positions may be "on" or "off" or positions guiding the flow to either of two possible directions. In the case of Figure 1 the valve units have two selectable positions guiding the flow to either of two possible directions.

The fluid flow system 10 in figure 1 depicts particularly an embodiment of a cooling system of an internal combustion piston engine 100, however in a schematic manner. The fluid flow control device shown in Figure 1 is arranged in connection with a cooling system, in which the fluid is water based cooling liquid, the utilization unit 16 depicts the cooling channels of the engine, particularly the cooling channels 16 in the cylinder head of the engine. The processing unit 20 is a cooler system, in which the cooling liquid may be cooled. Thus the engine 100 comprises suitably arranged cooling channels in the engine and a fluid flow control device 22 which governs the cooling operation of the fluid flow system.

The control system 30 which is arranged to control each of the valve units 22.1, 22.2,... 22.N is connected to a temperature probe 32, 32' arranged in connection with the engine 100. The probe 32 may comprise one or several temperature probe units. According to an advantageous embodiment of the invention the probe is arranged remotely to the control device 22. Preferably at least one temperature probe unit is arranged in vicinity of the combustion chamber of the engine, for example to at least one of the cylinder head of the engine. This is depicted in figure 1 by the position of the probe 32 near the utilization unit 16, which may be for example a cooling channel in the cylinder head. This way, since the operation of the fluid flow control device is controlled based on the actual value measured by the probe/devices, the proportion of the cooling liquid guided to the cooler system is determined by the actual cooling demand sensed particularly at the location where the thermal load is high and/or critical. Also, the provision of utilizing several probes 32, 32' makes it possible to adjust the cooling more precisely according to the actual requirements. In this case the control scheme may be selected based on actual temperature of several locations. The present invention also makes the temperature control of the engine faster, since it even enables proactive control operation.

According to an embodiment of the invention the control system 30 of the cooling system comprises two or more temperature probes 32, 32'. The at least two temperature probe units are according to an embodiment of the invention at different locations of the engine. In that case the operation of the fluid flow control device is controlled by making use of said two or more temperature probes 32, 32'. This way the temperature control may be arranged to be dependent on temperature of at least two different locations neither of which is the temperature of the cooling liquid at the location of the valve units. Thus the control is more accurate and various actual operational parameters may be taken into account in the control.

With the present invention it is also possible to obtain equal operation by making use of different selection of valve units, which increases the redundancy of the engine considerably. This is of great advantage particularly in marine vessel power systems.

Each of the valve units has different flow characteristics. In practise this means preferably that the flow areas of the valve units differ from each other.

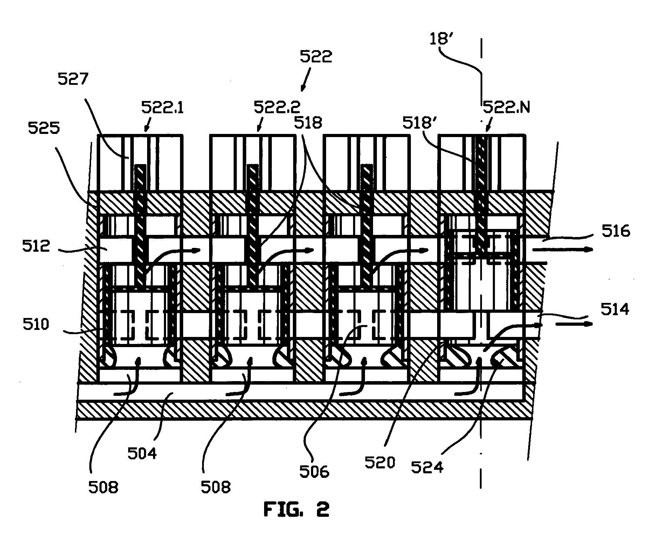

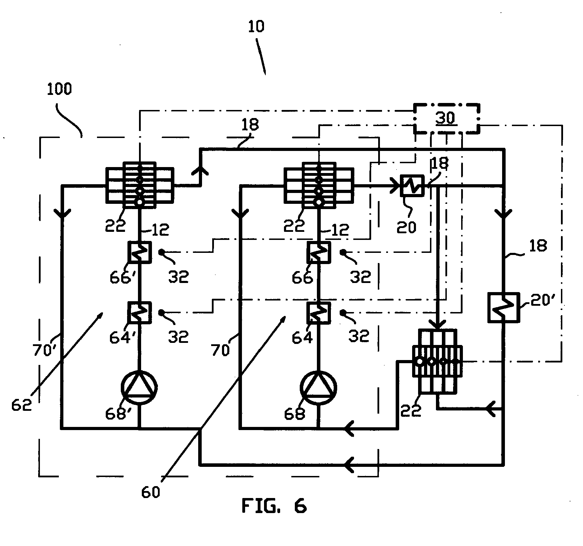

In Figure 2 there is shown an advantageous embodiment of the fluid flow control device 522 according to the invention. The fluid flow control device 522 comprises a base part 525 into which the other part of the fluid flow control device are arranged. The base part is provided with a fluid inlet manifold 504 to which the main fluid channel is to be connected. The base part 525 comprises also several valve spaces 506. The valve spaces 506 are cylindrical in the embodiment of figure 6 and the first end 508 of each space is connected to the fluid inlet manifold 504. The valve spaces are substantially identical to each other. The valve space is provided with a first outlet 510 and a second outlet 512 in its cylindrical portion. The first outlet 510 of each valve space is connected to a first outlet manifold 514 common to the first outlets. Respectively the second outlet 512 of each valve space is connected to a second outlet manifold 516 common to the second outlets.

There is valve member 518 arranged in each valve space. The valve member and the valve space form a valve unit in this embodiment. The valve member is arranged movable in the valve space 506 so that the position of the valve member rules the operational position of the valve unit. The valve member 518 is shown at its position where the fluid inlet manifold 504 is in flow connection with the first outlet manifold 514. With the reference 518' there is shown the valve member at its other position where the fluid inlet manifold 504 is in flow connection with the second outlet manifold 516.

To be more specific, the valve member 518 shown in the Figure 2 is a cylindrical substantially hollow sleeve which covers a portion of the valve space 506. As the position of the sleeve is changed it either covers the first outlet 510 or the second outlet 512, which makes it possible to guide the fluid inside the valve member 518. The valve member and valve space both have cylindrical cross section and common centre line 18'. In this case the movement of the valve member takes place in the direction of the centre line 18'.

The valve member is arranged such that only one of the first outlet 510 and the second outlet 512 may be in flow connection with the fluid inlet manifold 504.

In the embodiment shown in figure 2 the inner surface of the valve space 506 is covered with a sleeve 520 inside of which the valve member 518 is arranged. The inner surface of the sleeve 520 and the counter surface of the valve member 518 form a cylindrical sealing by means of which the fluid flow is directed to the direction ruled by the position of the valve member. The sleeve is provided with openings at the location of the first outlet 510 and the second outlet 512. The sleeve 520 is removably assembled and exchangeable so that after a period of use and/or when damaged or worn it may be replaced in a non destructive manner.

In the first end of the valve space 508 there is a restriction element 524. The valve spaces of valve units 522.1, 522.2, ... 522.N are substantially identical particularly with respect to other parts except the restriction element 524. The restriction element is arranged immediately upstream the sleeve 520, before the valve member. The restriction part 524 is advantageously a flange having an orifice. Here, the orifice is centrally located in the flange In each of the valve units the orifice is of different diameter. This way the flange effects on the flow characteristics of the valve unit. The valve units may be modularized allowing their flow characteristics to be changed by simply changing only the flange part 524 in the valve unit. The restriction element may also be an element, such as a plate, with one or several holes located centrally or offset from centreline of the element.

Each valve unit 522.1, 522.2, ... 522.N is provided with an actuator 527, which is arranged to move the valve member in the valve space. The actuator is in the embodiment of figure 2 a dual action actuator which is capable of subjecting force to the valve member 518 in two directions in order to actively move the valve member between it two operational positions. The actuator may be a solenoid operated or hydraulically operated device or a combination thereof in which case a solenoid system controls the hydraulic pressure applied to the actuator 527. Each of the actuators 527 are in connection with a control device (not shown).

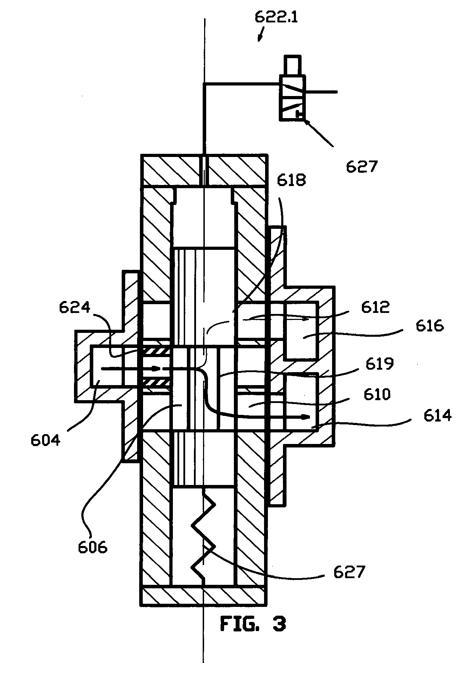

In figure 3 there is shown an embodiment of a valve unit 622.1 in which the fluid is passed outside the valve member 618 along the recess 619 arranged in to the valve member. In the fluid flow control device there are several valve units 622.1 parallel coupled The valve space 606 is provided with a first outlet 610 and a second outlet 612 in its cylindrical portion connected to the first outlet manifold 614 and to the second outlet manifold 616 respectively. In this embodiment the actuator 627 is a single action actuator which is capable of subjecting force to the valve member 618 only in one direction. In order to move the valve member between it two operational positions there is a spring element 627 arranged in the opposite end to the actuator 627 of the valve member 618. The actuator 627 is of hydraulic/pneumatic type and it is capable of moving the valve member 618 in a direction against the spring and after releasing the work pressure the spring returns the valve member back to its initial position.

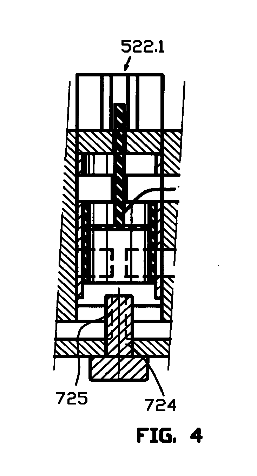

There is also a restriction element 624 arranged in the valve unit 622 of figure 4. The restriction element is arranged immediately upstream valve member. The restriction element 524 is in this embodiment a sleeve having a central opening. This way the sleeve effects on the flow characteristics of the valve unit. The valve units may be modularized allowing their flow characteristics to be changed by simply changing only the sleeve in the valve unit.

The restriction part may be realized in many ways. As is depicted in figure 4, instead of a flange or a sleeve the restriction part may be a replaceable pin 724 extending into the fluid flow channel of the valve unit. The valve unit in figure 4 corresponds to the valve unit in figure 2 except to the details relating to the restriction element. The effect of the restriction element may be changed by changing the pin having different dimensions as depicted by the dash-dot line 725.

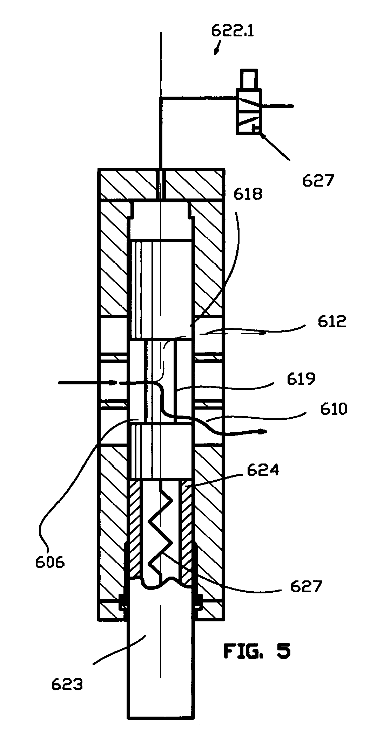

In figure 5 there is shown a still another embodiment of the invention which mainly corresponds to that of figure 3. In the figure 5 there is shown a restriction element 623, which is accomplished by means of stop 624 against which the valve member 618 is pushed at a position in which the fluid is directed into the first outlet 610. Due to the stop 624 the valve member movement is restricted so that it restricts the flow in to the first outlet 610. The valve unit may comprise a stop also at its other end to limit the movement of the valve member to its other operational position (not shown). This kind of a stop may be used in various kinds of valve configurations.

In Figure 6 there is shown another embodiment of the fluid flow system 10 which is here a cooling system of a large piston combustion engine. The cooling system comprises a first system 60 i.e. so called high temperature (HT) circuit and a second system 62 i.e. so called low temperature (LT) circuit. The HT circuit comprises cooling system for cylinder jackets 64 and a high temperature cooling system for charge air 66 arranged into the main fluid channel 12 in series. The HT circuit also comprises a circulation pump 68 and a return channel 70. The return channel is at the other end connected to the inlet side of the pump 68 and at the other end to a fluid flow control device 22 according to the invention. There is also a branch channel 18 which branches from the main fluid channel 12. The purpose of the branch channel is to pass a portion (0% - 100%) of the fluid through a processing unit 20 connected thereto. The processing unit 20 is in this embodiment particularly a heat recovery device for the HT system. The branch channel 18 is also connected to the inlet side of the pump 68 so, that there is a second fluid flow control device 22 according to the invention connected to the branch channel. The second fluid flow control device 22 directs the flow in the branch channel either from the heat recovery device directly to the inlet side of the pump or from the heat recovery device to the inlet side of the pump via a main cooler 20'.

The LT circuit comprises a low temperature cooling system for charge air 66' cooling section and a lubrication oil cooling system 64' arranged into the main fluid channel 12 of the LT in series. The HT circuit also comprises a circulation pump 68' and a return channel 70'. The return channel is also at the other end connected to the inlet side of the pump 68' and at the other end to a fluid flow control device 22 according to the invention. There is also a branch channel 18 which branches from the main fluid channel 12. The purpose of the branch channel is to pass a portion (0% - 100%) of the fluid through a main cooler 20' connected thereto. The branch channel 18 is also connected to the inlet side of the pump 68. Thus the main cooler 20' is common for the HT and LT circuits.

The fluid flow control devices are also connected with a control system 30 arranged to control each of the fluid flow control devices 22 and their valve units into one of the two operational positions. The control system 30 is connected to several probes 32 in connection with the engine 100.

The control system 30 is arranged to operate so that it reads or receives the measurement value from one or all of the probes 32 at several locations of the engine remotely to at least one of the control device. According to an embodiment the probes 32 are at several locations of the engine but remotely to all of the control devices. Based on the measurement value or values of the probes the control system determines a need for a change in the control scheme practised. In case a change is needed the control device selects a new combination of operational positions of the valve units in one or several control devices 22.

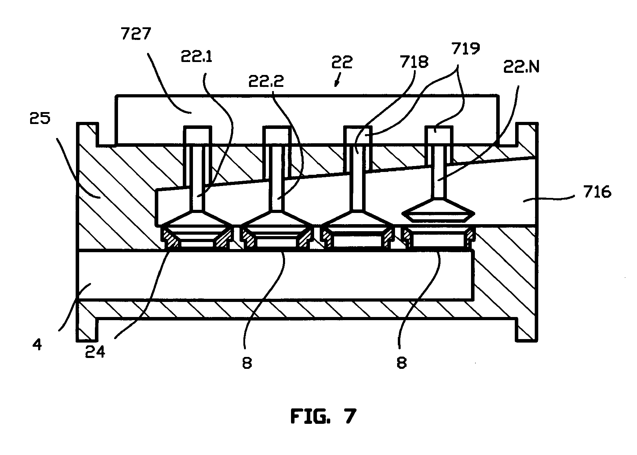

In figure 7 there is also schematic illustration of a further embodiment of the invention according to which each of the valve unit 22.1, 22.2, ... 22.N is provided with a manual locking system 719 by means of which the valve member in each valve unit may be locked to either of their operational positions, The manual locking system 719 comprises locking means in connection with each valve unit so that for example in the case of malfunction of the valve unit may be locked. The locking means is also arranged to allow the manual change of the operational position. Even if this is depicted here with the reference to the figure 7 the manual locking system may be naturally arranged in other embodiments of the valve units according to the invention.

There is a restriction element 24 arranged to the fluid flow control device 22 in connection with each valve member. The restriction element 24 is also arranged to operate as a valve seat mating with a control surface of the valve member. The valves are substantially identical particularly with respect to other parts except the restriction element 24. It is clear that the restriction element may also be separate to the valve seat. The valve units may be modularized allowing their flow characteristics to be changed by simply changing only the restriction element 24 in the valve unit.

Each valve unit valve member is provided with an actuator, here a common actuator system 727 is arranged, which is arranged to move each valve member in the valve space independently.

While the invention has been described herein by way of examples in connection with what are, at present, considered to be the most preferred embodiments, it is to be understood that the invention is not limited to the disclosed embodiments, but is intended to cover various combinations or modifications of its features, and several other applications included within the scope of the invention, as defined in the appended claims.

## Claims

1. Arrangement for an internal combustion piston engine having a cooling system for conveying heat from the internal combustion piston engine and maintaining temperature of the engine and/or its parts at a predetermined range, the cooling system comprising a main cooling fluid channel (12) having a pump system (14) which main cooling fluid channel is arranged to run though at least a part of the engine from which heat is extracted, and a branch channel (18) which branches from the main cooling fluid channel (12) forming parallel flow path to the main cooling fluid channel (12) in which branch channel there is a cooler system (20) for cooling the cooling fluid, and into which cooling system a fluid flow control device (22) is arranged at a the location where the branch channel branches from the main cooling fluid channel, comprising at least two parallel valve units each having two operational positions, **characterized in that** the valve units are on-off valves, and in the arrangement the combination of operational positions of the at least two parallel valve units governs the flow of the cooling fluid either to the branch channel (18) or further in the main fluid channel (12).

2. Arrangement for an internal combustion piston engine according to claim 1, **characterized in that** each of the valve units has different flow characteristics.

3. A fluid flow control device for an internal combustion piston engine according to claim 1 or 2, **characterized in that** the fluid flow control device (22) comprises two or more parallel valve units (22.1 - 22.N).

4. Arrangement for an internal combustion piston engine according to claim 1, **characterized in that** the arrangement comprises a control system (30) which is arranged to control each of the valve units (22.1, 22.2,... 22.N) into one of the two operational positions, between which the valve unit may be switched for selecting a combination of the operational positions of the valve units.

5. Arrangement for an internal combustion piston engine according to claim 1, **characterized in that** control a control system (30) is provided with a probe (32.32') arranged remotely to the control device (22).

6. Arrangement for an internal combustion piston engine according to claim 1, **characterized in that** each valve unit is provided with an actuator connected to the control system (30).

7. Arrangement for an internal combustion piston engine according to claim 1, **characterized in that** control a control system (30) is provided with at least two probes (32.32') arranged at different location in the engine.

8. Arrangement for an internal combustion piston engine according to claim 1, **characterized in that** each valve unit (22.1, 22.2, ... 22.N) is provided with a removably assembled restriction element (24) effecting on the flow characteristics of the valve unit.

9. Arrangement for an internal combustion piston engine according to claim 1, **characterized in that** the valve units (22.1, 22,2, ... 22.N) are identical to each other, with an exception that the restriction elements (24) are different from each other.

10. Arrangement for an internal combustion piston engine according to claim 1, 2 or 3, **characterized in that** the fluid flow control device (22) is arranged to controllably operate with a number of combinations of two operational positions of its valve units.

11. Internal combustion piston engine comprising a cooling system for conveying heat from the internal combustion piston engine and maintaining temperature of the engine and/or its parts at a predetermined range, having cooling sections for charge air (66, 66'), lubrication oil (64') and for cylinders (64), **characterized in that** the cooling system comprises a first system (60), and a second system (62), in which the first system comprises cooling system for cylinder jackets (64) and a high temperature cooling system for charge air (66) and the second system comprises a low temperature cooling system for charge air (66') cooling section and a lubrication oil cooling system (64'), and that the first (60) and the second systems (62) are cooling systems according to anyone of the claims 1-10.

## Patentansprüche

1. Anordnung für einen Kolbenverbrennungsmotor mit einem Kühlsystem, um Wärme von dem Kolbenverbrennungsmotor weg zu befördern und die Temperatur des Motors und/oder seiner Teile in einem bestimmten Bereich zu halten, wobei das Kühlsystem einen Hauptkühlfluidkanal (12) mit einem Pumpensystem (14), welcher Hauptkühlfluidkanal so angeordnet ist, dass er durch wenigstens einen Teil des Motors, von dem Wärme abgezogen wird, verläuft, und einen Zweigkanal (18), der von dem Hauptkühlfluidkanal (12) abzweigt und einen zu dem Hauptkühlfluidkanal (12) parallelen Fließpfad bildet, umfasst, wobei sich in dem Zweigkanal ein Kühlersystem (20) zum Kühlen des Kühlfluids befindet, und wobei in dem Kühlsystem an einer Stelle, an der der Zweigkanal von dem Hauptkühlfluidkanal abzweigt, eine Fluidstromsteuervorrichtung (22) angeordnet ist, die wenigstens zwei parallele Ventileinheiten umfasst, welche jeweils zwei Betriebspositionen aufweisen, **dadurch gekennzeichnet, dass** die Ventileinheiten Auf/Zu-Ventile sind, und dass bei der Anordnung die Kombination der Betriebspositionen der wenigstens zwei parallelen Ventileinheiten den Fluss des Kühlfluids entweder zu dem Zweigkanal (18) oder weiter in den Hauptfluidkanal regelt.

2. Anordnung für einen Kolbenverbrennungsmotor nach Anspruch 1, **dadurch gekennzeichnet, dass** jede der Ventileinheiten unterschiedliche Fließeigenschaften aufweist.

3. Fluidstromsteuervorrichtung für einen Kolbenverbrennungsmotor nach Anspruch 1 oder 2, **dadurch gekennzeichnet, dass** die Fluidstromsteuervorrichtung (22) zwei oder mehr parallele Ventileinheiten (22.1 bis 22.N) umfasst.

4. Anordnung für einen Kolbenverbrennungsmotor nach Anspruch 1, **dadurch gekennzeichnet, dass** die Anordnung ein Steuersystem (30) umfasst, das dazu eingerichtet ist, jede der Ventileinheiten (22.1, 22.2, ... 22.N) in eine der beiden Betriebspositionen, zwischen denen die Ventileinheit umgeschaltet werden kann, zu steuern, um eine Kombination der Betriebspositionen der Ventileinheiten zu wählen.

5. Anordnung für einen Kolbenverbrennungsmotor nach Anspruch 1, **dadurch gekennzeichnet, dass** ein Steuersystem (30) mit einer Sonde (32, 32') versehen ist, die von der Steuervorrichtung (22) entfernt angeordnet ist.

6. Anordnung für einen Kolbenverbrennungsmotor nach Anspruch 1, **dadurch gekennzeichnet, dass** jede Ventileinheit mit einem Aktuator versehen ist, der mit dem Steuersystem (30) verbunden ist.

7. Anordnung für einen Kolbenverbrennungsmotor nach Anspruch 1, **dadurch gekennzeichnet, dass** ein Steuersystem (30) mit wenigstens zwei Sonden (32, 32') versehen ist, die an unterschiedlichen Stellen in dem Motor angeordnet sind.

8. Anordnung für einen Kolbenverbrennungsmotor nach Anspruch 1, **dadurch gekennzeichnet, dass** jede Ventileinheit (22.1, 22.2, ... 22.N) mit einem abnehmbar eingebauten Beschränkungselement (24) versehen ist, das die Fließeigenschaften der Ventileinheit beeinflusst.

9. Anordnung für einen Kolbenverbrennungsmotor nach Anspruch 1, **dadurch gekennzeichnet, dass** die Ventileinheiten (22.1, 22.2, ... 22.N) untereinander identisch sind, außer dass sich die Beschränkungselemente (24) voneinander unterscheiden.

10. Anordnung für einen Kolbenverbrennungsmotor nach Anspruch 1, 2 oder 3, **dadurch gekennzeichnet, dass** die Fluidstromsteuervorrichtung dazu eingerichtet ist, steuerbar mit einer Anzahl von Kombinationen der beiden Betriebspositionen ihrer Ventileinheiten zu arbeiten.

11. Kolbenverbrennungsmotor, umfassend ein Kühlsystem, um Wärme von dem Kolbenverbrennungsmotor weg zu befördern und die Temperatur des Motors und/oder seiner Teile in einem bestimmten Bereich zu halten, das Kühlabschnitte für Ladeluft (66, 66'), Schmieröl (64') und für Zylinder (64) aufweist, **dadurch gekennzeichnet, dass** das Kühlsystem ein erstes System (60) und ein zweites System (62) umfasst, wobei das erste System ein Kühlsystem für Zylindermäntel (64) und ein Hochtemperaturkühlsystem für Ladeluft (66) umfasst, und das zweite System ein Niedertemperaturkühlsystem für den Kühlabschnitt der Ladeluft (66') und ein Schmierölkühlsystem (64') umfasst, und dass das erste (60) und das zweite System (62) Kühlsysteme nach einem der Ansprüche 1 bis 10 sind.

## Revendications

1. Agencement pour moteur à pistons à combustion interne présentant un système de refroidissement pour transférer de la chaleur provenant du moteur à pistons à combustion interne et maintenir la température du moteur et/ou de ses pièces dans une plage déterminée, le système de refroidissement comprenant un canal de fluide de refroidissement principal (12) présentant un système de pompe (14), lequel canal de fluide de refroidissement principal est agencé pour passer à travers au moins une partie du moteur de laquelle de la chaleur est extraite, et un canal de raccordement (18) qui est raccordé du canal de fluide de refroidissement principal (12) en formant un chemin d'écoulement parallèle au canal de fluide de refroidissement principal (12), dans lequel canal de raccordement est disposé un système de refroidisseur (20) pour refroidir le fluide de refroidissement, et dans lequel système de refroidissement, un dispositif de commande d'écoulement de fluide (22) est agencé à l'endroit où le canal de raccordement se raccorde depuis le canal de fluide de refroidissement principal, comprenant au moins deux unités de soupapes parallèles ayant chacune deux positions opérationnelles, **caractérisé en ce que** les unités de soupape sont des soupapes on-off, et dans l'agencement, la combinaison de positions opérationnelles des au moins deux unités de soupapes parallèles dirige l'écoulement du fluide de refroidissement soit vers le canal de raccordement (18) ou plus loin dans le canal de fluide de refroidissement principal (12).

2. Agencement pour moteur à pistons à combustion interne selon la revendication 1, **caractérisé en ce que** chacune des unités de soupapes présente des caractéristiques d'écoulement différentes.

3. Agencement pour moteur à pistons à combustion interne selon la revendication 1 ou 2, **caractérisé en ce que** le dispositif de commande d'écoulement de fluide (22) comprend deux unités de soupapes parallèles (22.1 - 22.N) ou plus.

4. Agencement pour moteur à pistons à combustion interne selon la revendication 1, **caractérisé en ce que** l'agencement comprend un système de commande (30) qui est agencé pour commander chacune des unités de soupape (22.1, 22.2, ... 22.N) dans l'une des deux positions opérationnelles, entre lesquelles l'unité de soupapes peut être basculée pour sélectionner une combinaison des positions opérationnelles des unités de soupape.

5. Agencement pour moteur à pistons à combustion interne selon la revendication 1, **caractérisé en ce qu'**un système de commande (30) est doté d'une sonde (32, 32') agencée à distance du dispositif de commande (22).

6. Agencement pour moteur à pistons à combustion interne selon la revendication 1, **caractérisé en ce que** chaque unité de soupapes est dotée d'un déclencheur relié au système de commande (30).

7. Agencement pour moteur à pistons à combustion interne selon la revendication 1, **caractérisé en ce qu'**un système de commande (30) est doté d'au moins deux sondes (32, 32') agencées à différents endroits du moteur.

8. Agencement pour moteur à pistons à combustion interne selon la revendication 1, **caractérisé en ce que** chaque unité de soupapes (22.1, 22.2, ... 22.N) est dotée d'un élément de restriction monté de façon amovible (24) agissant sur les caractéristiques d'écoulement de l'unité de soupape.

9. Agencement pour moteur à pistons à combustion interne selon la revendication 1, **caractérisé en ce que** les unités de soupape (22.1, 22.2, ... 22.N) sont identiques l'une à l'autre, à l'exception que les éléments de restriction (24) sont différents l'un de l'autre.

10. Agencement pour moteur à pistons à combustion interne selon la revendication 1, 2 ou 3, **caractérisé en ce que** le dispositif de commande d'écoulement de fluide (22) est agencé pour fonctionner de façon à pouvoir être commandé avec des combinaisons de deux positions opérationnelles de ses unités de soupape.

11. Moteur à pistons à combustion interne comprenant un système de refroidissement pour transférer de la chaleur provenant du moteur à pistons à combustion interne et maintenir la température du moteur et/ou de ses pièces dans une plage déterminée, présentant des sections de refroidissement pour de l'air de suralimentation (66, 66'), de l'huile lubrifiante (64') et pour des cylindres (64), **caractérisé en ce que** le système de refroidissement comprend un premier système (60) et un second système (62) dans lequel le premier système comprend un système de refroidissement pour des enveloppes de cylindre (64) et un système de refroidissement haute température pour de l'air de suralimentation (66), et le second système comprend un système de refroidissement basse température pour la section de refroidissement de l'air de suralimentation (66'), et un système de refroidissement de l'huile lubrifiante (64'), et **en ce que** les premier (60) et second (62) systèmes sont des systèmes de refroidissement selon l'une quelconque des revendications 1 - 10.
